# EUROPÄISCHE PATENTSCHRIFT

(11) **EP 2 677 872 B1**
(45) Veröffentlichungstag und Bekanntmachung des Hinweises auf die Patenterteilung: **07.11.2018**
(21) Anmeldenummer: 12712594.6
(22) Anmeldetag: 21.02.2012
(51) Int. Cl.: B01D 5/00, A21B 3/04, F24C 15/20

(54) **VERFAHREN ZUR ENTFERNUNG VON IN SCHWADEN ENTHALTENEN ORGANISCHEN INHALTSSTOFFEN UND DEREN UMWANDLUNGSPRODUKTEN UND ZUR WÄRMERÜCKGEWINNUNG AUS SCHWADEN UND EINE VORRICHTUNG ZUR DURCHFÜHRUNG DIESES VERFAHRENS**
METHOD FOR REMOVING ORGANIC COMPONENTS AND THE CONVERSION PRODUCTS OF SAID COMPONENTS CONTAINED IN VAPOR AND FOR RECOVERING HEAT FROM VAPOR, AND DEVICE FOR CARRYING OUT SAID METHOD
PROCÉDÉ POUR ÉLIMINER DES COMPOSANTS ORGANIQUES CONTENUS DANS DES BUÉES DE CUISSON ET LEURS PRODUITS DE CONVERSION AINSI QUE POUR RÉCUPÉRER LA CHALEUR DÉGAGÉE DE BUÉES ET DISPOSITIF POUR METTRE LEDIT PROCÉDÉ EN OEUVRE

(30) Priorität: 21.02.2011 DE 102011004460
(43) Veröffentlichungstag der Anmeldung: 01.01.2014
(73) Patentinhaber: Kuchenmeister GmbH, 59494 Soest (DE)
(72) Erfinder: GERMAN, Heiner, 13469 Berlin (DE)
(74) Vertreter: Maikowski & Ninnemann Patentanwälte Partnerschaft mbB
(86) Internationale Anmeldenummer: PCT/EP2012/052951
(87) Internationale Veröffentlichungsnummer: WO 2012/113800

(56) Entgegenhaltungen:
- EP-A1- 0 388 751
- AU-A1- 2008 229 713
- DE-C1- 3 643 299
- DE-U1- 8 808 218
- DE-U1- 29 709 784
- GB-A- 2 076 527

## Beschreibung

Die vorliegende Erfindung betrifft ein Verfahren zur Behandlung und Wärmerückgewinnung von Schwaden gemäß dem Oberbegriff des Anspruchs 1, eine Vorrichtung zur Durchführung dieses Verfahrens gemäß Anspruch 9 und die Verwendung dieser Vorrichtung nach Anspruch 12.

Schwaden, insbesondere die im Backgewerbe im Backraum der Backöfen entstehenden Backschwaden, bestehen typischerweise aus Wasserdampf, Luft sowie anderen, teilweise umweltbelastenden und geruchsaktiven Bestandteilen.

Der Wasserdampfanteil der Backschwaden stammt sowohl aus außerhalb des Backofens erzeugtem, in den Backofen eingeführtem Wasserdampf, als auch aus dem Wasser, das aus dem Backgut während des Backens ausdampft. Bei direkt beheizten Backöfen entstammt zusätzlicher Wasserdampf aus den Verbrennungsgasen der Brenner.

Der eingeführte Wasserdampf benötigt zu seiner Erzeugung etwa ein Drittel des gesamten Wärmebedarfes der Backwarenherstellung. Der Wasserdampf dient technologischen Zwecken, u.a. dazu, die Oberfläche der Teigstücke elastisch zu halten, bis diese ihr volles Volumen erreichen, und das Aussehen der Teigstücke positiv zu beeinflussen. Seine Konzentration in der Backraumatmosphäre entscheidet in den verschiedenen Zeitabschnitten des Backvorgangs maßgeblich die Gebäckqualität.

Der Luftanteil der Backschwaden stammt aus der Umgebung der Backöfen. Die Luft dringt über den natürlichen Auftrieb an Ofenöffnungen und an Undichtigkeiten des Backraums in diesen ein. Bei direkt beheizten Backöfen entstammt den Verbrennungsgasen der Brenner zusätzliche Luft.

Wegen des Gehalts an Wasserdampf enthalten Backschwaden eine große Menge an Energie in Form von Kondensationswärme. Die Rückgewinnung der in den Backschwaden erhaltenen Energie ist somit von bedeutender ökonomischer und ökologischer Relevanz.

Wasserdampf und Luft werden im Backraum typischerweise auf Temperaturen von über 100°C erhitzt und fallen im Verlauf des Backvorganges in unterschiedlichen Mengenverhältnissen in Form der so genannten Backschwaden an, Backschwaden sind belastet mit organischen Bestandteilen, mit deren Umwandlungsprodukten sowie bei direkt beheizten Öfen mit den Rauchgasen aus den Heizeinrichtungen.

Verschiedene Lösungsvorschläge zur Wärmerückgewinnung aus Schwaden, insbesondere Backschwaden, wurden in der Vergangenheit verfolgt.

So ist aus der DE 197 23 407 A1 bekannt, die Backschwaden zusammen mit den Rauchgasen aus den öl- oder gasbefeuerten Heizeinrichtungen von Durchlaufbacköfen durch eine wärmetauschende und abgasreinigende Einrichtung zu führen, die wiederum mit einem Speisewasserspeicher und einem Dampferzeuger verbunden sind.

Die DE 30 13 330 A1 beschreibt ebenfalls ein Verfahren zur Rückgewinnung von Abwärmeenergie und deren Wiederverwendung beim Backvorgang, wobei die Backschwaden in einem ersten Schritt in einen Wärmetauscher und in einem zweiten, folgenden Schritt zurück in die Dampfzone des Backofens geführt wird.

In der DE 10 2009 014 805 A1 wird eine Vorrichtung zur Energierückgewinnung aus Abgasen und Backschwaden in Kombination mit einer Reinigung der Abgase offenbart, wobei die Abgase und Backschwaden jeweils durch Module geführt werden. Diese Module bestehen aus einer Wärmetauschkammer und einer Reinigungskammer. In letzterer ist ein rotierender Scheibenwäscher angeordnet, der eine Reinigung der Abgase und Schwaden bewirkt. Im Laufe des Reinigungsvorganges erfolgen eine Rauchgasentschwefelung und eine Reduzierung der Stickoxide sowie eine Abtrennung der Feinstaubpartikel. Die Scheiben des Scheibenwäschers tauchen in ein Flüssigkeitsbad ein, um so die an den Scheiben anhaftenden Feststoffbestandteile abzuwaschen.

EP 0 388 751 A1 beschreibt einen Konvektionsofen mit einer Leitung, die zum Ableiten von Dampf aus dem Ofen dient. Diese Leitung kann mit einer Sprühvorrichtung zum Einsprühen von kaltem Wasser dienen, so dass es dabei zur Kondensation der Dämpfe kommt.

DE 88 08 218 U1 betrifft einen Dampfkondensator bestehend aus einem Gehäuse mit einem Dampfkanal zum Abführen der Dämpfe und Kühlluftkanäle, die den Dampfkanal seitlich umschließen. Die Dampfkanäle werden mit Kühlwasser über eine Düse besprüht.

DE 36 43 299 C1 betrifft eine Vorrichtung mit einem Zwischenboden, an welchem Rohre befestigt sind, die sich vertikal und parallel zueinander nach oben erstrecken und an beiden Enden offen sind. Der unten von dem Zwischenboden und seitlich durch den Mantel das Gehäuseteil begrenzte Raum dient der Aufnahme von Kühl- und Spülwasser für die Rohre. Das Kühlwasser wird über eine Zuleitung in den unteren Teil des Raumes eingesprüht.

GB 2 076 527 A betrifft ebenfalls eine Vorrichtung zur Behandlung von Wasserdampf mit einem Filter, durch den der Dampf zwecks Abtrennung von öligen oder fettigen Dämpfen geführt wird. Der gereinigte Wasserdampf wird anschließend in den Kondensator geführt, in welchen Wasser über eine Düse eingesprüht wird und damit der Dampf kondensiert.

DE 297 09 784 U1 beschreibt eine Einrichtung zur Rauchgasreinigung und Energierückgewinnung für mit Gas oder Ölbrennern betriebenen Anlagen bestehend aus einer Wärmetauscheinrichtung und einem Rauchgaswäscher. Die Rauchgase werden durch einen Rauchgaswäsche geführt (Kalkstein, der mit Wasser besprüht wird) und anschließend aus der Anlage abgeführt.

AU 2008 229 713 A1 beschreibt ein Verfahren zur Herstellung von carbonierten Wasser, wobei zunächst CO2 Gas hergestellt wird und in situ mit Wasser unter Herstellung von carbonierten Wasser vermischt wird. Dieses Verfahren wird bevorzugt in Kühlschränken ausgeführt. Das beschriebene System umfasst unter anderem einen Kessel, der mit einer Flüssigkeit befüllt ist. Das Wasser kann diesen Kessel in Form einer Sprühflüssigkeit oder in Form von Tropfen oder über einen Oberflächenbereich fließend in den Kessel eingeführt werden.

DE 2433641 beschreibt eine Vorrichtung zur Direktkondensation von Dämpfen an einer kalten Flüssigkeit. Die Vorrichtung umfasst Lochbleche als Zwischenböden, die mit einem Abstand übereinander in einem gemeinsamen Behälter angeordnet sind. Die Flüssigkeit wird in geringer Schichthöhe quer über die waagerecht angeordneten Lochbleche geführt und der Dampf wird von der Unterseite des Lochblechs durch dessen Öffnungen durch die Flüssigkeit gedrückt.

CH 442 209 betrifft ein Verfahren und eine Maschine zum Waschen von Wäsche. Der beim Waschen entstehende Dampf wird in einen Kondensatabscheider betrieben, der als Berieselungskühler ausgebildet ist.

Schwaden, insbesondere Backschwaden, weisen neben dem hohen Energiegehalt auch - bedingt durch den Gar- und Backvorgang - Anteile von organischen Bestandteilen wie diverse Öle, Fette, Zuckerstoffe, Proteine, Alkohole und organische Säuren sowie deren Umwandlungsprodukte auf, die in den Backschwaden in gasförmiger, flüssiger oder fester (kristallin, amorph) Form vorliegen.

Diese Stoffe werden üblicherweise unmittelbar mit den Schwaden an die Umgebung abgegeben und können insbesondere wegen ihrer Geruchsaktivität zu erheblichen Belästigungen führen. Die Backschwaden gelangen aus dem Backraum über Schwadenkamine in die Umwelt und bilden, insbesondere bei industrieller Produktion, eine Emissionsquelle.

Umweltbelastende und geruchsaktive Schwaden entstehen üblicherweise in Anlagen, die zur Herstellung von Nahrungsmitteln wie z.B. Back- oder Konditoreiwaren verwendet werden. Solche Anlagen kommen in verschiedenen Bereichen der Lebensmittelindustrie wie z.B. in Großbäckereien, Großküchen oder der fleischverarbeitenden Industrie zum Einsatz. Beträchtliche Mengen an Schwaden werden auch von Restaurantküchen u.a. in Schnellrestaurants oder Selbstbedienungsrestaurant freigesetzt, die ebenfalls zu einer erheblichen Umweltbelastung führen können.

Mittels der bekannten Verfahren zur Wärmerückgewinnung aus Backschwaden ist es bisher nur bedingt möglich, die organischen, umweltbelastende Komponenten kontinuierlich aus den Backschwaden zu entfernen. So scheitern die technischen Ausführungen bis heute an den festen Inhaltstoffen der Backschwaden, insbesondere an den fetthaltigen und staubhaltigen Anteilen, welche die Wärmetauscher verstopfen und den erforderlichen Wärmeübergang bis zur Ineffizienz behindern.

So wird in der DE 36 43 299 C1 eine Vorrichtung zum Entfeuchten von Raumluft oder Abgasen und/oder zum Kondensieren des Dunstes und der Schwaden aus Bäckereien beschrieben. Die hierzu verwendete Vorrichtung umfasst Rohre, die sich vertikal und parallel zueinander nach oben erstrecken und an beiden Enden offen sind, sowie Behältnisse zur Aufnahme von Kühl- und Spülwasser für die Rohre. Das zu behandelnde Medium wie z.B. Backschwaden strömt durch die von außen gekühlten Rohre nach oben, die als indirekte Wärmeaustauscher dienen und somit eine Kondensation des Wassers aus den Schwaden bewirken. Die Vorrichtung kann zusätzlich in einer unteren Kammer eine Sprüheinrichtung aufweisen, die zusätzlich eine Sprühkondensation des Dampfanteils in dem nach oben strömenden Medium bewirkt. Zugleich werden durch diese Besprühung des nach oben strömenden Mediums mit Wasser mitgeführte Schwebstoffe aus dem Medium ausgewaschen. Nachteilig ist bei der hier beschriebenen Vorrichtung deren recht komplexer Aufbau. Insbesondere erfordert diese Vorrichtung einen hohen konstruktiven Aufwand und ggf. einen erhöhten Reinigungsaufwand durch Drallkörper oder Bürsten, was einem flexiblen und kostengünstigen Einbau in Schwaden erzeugende Vorrichtungen entgegensteht.

Es sind weitere Entwicklungen zur Entfernung der umweltrelevanten Emissionen aus Backschwaden bekannt. Dabei werden die Backschwaden durch Oxidation in einer Verbrennungsanlage oder durch indirekte Kondensation in einer Kühlanlage von umweltbelastenden Inhaltsstoffen befreit. Diese Verfahren sind jedoch mit erheblichem Zusatz-Energieaufwand verbunden und daher sehr kostenintensiv.

Es ist daher eine Aufgabe der vorliegenden Erfindung, ein Verfahren und eine Vorrichtung bereitzustellen, die eine energiegünstige Entfernung der organischen, umweltbelastenden Komponenten und deren Umwandlungsprodukte aus den Schwaden, insbesondere den Backschwaden ermöglicht.

Diese Aufgabe wird erfindungsgemäß durch ein Verfahren mit den Merkmalen des Anspruchs 1 und eine Vorrichtung mit den Merkmalen des Anspruchs 9 gelöst.

Demnach wird ein Verfahren zur Behandlung von Schwaden, insbesondere von Backschwaden, zur Anwendung in Anlagen, die Schwaden mit Wasserdampf und organischen Bestandteilen und deren Umwandlungsprodukten freisetzen, insbesondere in Backöfen, bereitgestellt, mittels welchem der in den Schwaden enthaltende Wasserdampf einstufig durch direkte Kühlung der Schwaden mittels Kontaktierung der Schwaden mit mindestens einem Kühlmedium im Gegenstrom in mindestens einem Kondensationsraum kondensiert wird. Während des Kondensationsvorganges werden auch die in den Schwaden enthaltenen organischen Bestandteile und deren Umwandlungsprodukte größtenteils abgeschieden.

Das mindestens eine Kühlmedium läuft dabei in den mindestens einen Kondensationsraum in Form eines kontinuierlichen Flüssigkeitsstromes mit einer Fließgeschwindigkeit zwischen 0,5 m/min und 10,0 m/min ohne Bildung von Tröpfchen ein.

Die Kondensation des in den Schwaden enthaltenen Wasserdampfes und die Abscheidung der organischen Bestandteile und deren Umwandlungsprodukte erfolgen erfindungsgemäß an mindestens einer Oberfläche eines im Kondensationsraum angeordneten Kondensationsmittels, wobei das im Kondensationsraum angeordnete Kondensationsmittel mindestens eine Hohlraumstruktur in Form eines offenporigen Zellsystems aufweist, und wobei das für das Kondensationsmittel verwendete Material aus einem metallischen und/oder keramischen Stoff besteht.

Demnach wird die Kondensation des in den Schwaden enthaltenen Wasserdampfes in dem mindestens einen Kondensationsraum ausschließlich durch direkten Kontakt der Backschwaden mit einem Kühlmedium, d.h. bevorzugt ohne Verwendung von Wärmeaustauschern bewirkt.

Das vorliegende Verfahren betrifft somit eine einstufige Kondensation, wobei die Kondensation des Wassers aus den Schwaden innerhalb des mindestens einen Kondensationsraumes fast vollständig bzw. vollständig erfolgt. Dabei sind keine weiteren Wärmeaustauscher, die z.B. von einem geeigneten Kühlmedium durchströmt werden, in dem Kondensationsraum vorgesehen.

Durch das Verfahren wird der Schwaden in einen Kondensatanteil und einen Luftanteil aufgeteilt. Der Kondensatanteil enthält die gleichzeitig mit dem Wasserdampf abgeschiedenen organischen Bestandteile und deren Umwandlungsprodukte sowie die rückgewonnene Wärme. Der Wasserdampf der Schwaden bzw. dessen Kondensat sind in diesem Verfahren als ein Trägermedium für die organischen Bestandteile und deren Umwandlungsprodukte anzusehen.

Das erfindungsgemäße Verfahren ermöglicht somit eine gekoppelte bzw. gleichzeitige Entfernung umweltbelastender, organischer Inhaltsstoffe und deren Umwandlungsprodukten aus den Schwaden bei gleichzeitiger oder zeitversetzter Wärmerückgewinnung aus den Schwaden. Durch die direkte Kühlung der Schwaden werden die umweltbelastenden, organischen Stoffe und deren Umwandlungsprodukte aus den Schwaden abgeschieden und somit aus den Schwaden entfernt. Der Luftanteil der gekühlten Schwaden besteht nach der Kühlung zum größten Teil aus Luft und kann nahezu frei von Umweltbelastungen in die Umwelt abgeführt werden. Das Schwadenkondensat enthält die ausgeschiedenen, organischen Bestandteile. Diese sind biologisch abbaubar und können mit dem Abwasser entsorgt werden. Es ist aber auch möglich, das erhaltene Schwadenkondensat anderweitig zu benutzen, wie weiter unten detailliert beschrieben wird.

Bevorzugt weisen die Schwaden bei Eintritt in den Kondensationsraum eine Taupunkttemperatur θd von mindestens 50°C, bevorzugt in einem Bereich zwischen 50°C und 95 °C auf. Unter der Taupunkttemperatur ist dabei diejenige Temperatur zu verstehen, bei der sich ein Gleichgewichtszustand zwischen Wasser im flüssigen und dampfförmigen Aggregatszustand einstellt und bei deren Unterschreitung Kondensatbildung einsetzt.

Eine Vorraussetzung für die Effizienz des vorliegenden Verfahrens sind große Wasserdampfkonzentrationen in den Backschwaden, was durch entsprechende Klimaregelung des Backraums unter Anreicherung des im Backraum vorhandenen Wasserdampfs auf Taupunkttemperaturen oberhalb 50 °C geschehen kann. Eine Klimaregelung des Raums, in welchem die Umwandlung der Lebensmittel erfolgt, ermöglicht die Anwendung des Verfahrens auch in anderen großtechnischen Anlagen als Backöfen, wie z.B. in Röst-, Trocknungs- oder Kochanlagen.

Bei Backvorgängen wird die Taupunkttemperatur als absolutes Maß für die Konzentration von Wasserdampf in feuchter Luft gewählt. Die physikalisch maximal erzielbare Taupunkttemperatur beträgt bei atmosphärischem Druck 100 °C. Je nach Fabrikat, Bauart und Bauzustand des Backofens wird die maximal erzielbare Taupunkttemperatur tatsächlich erreicht, in der Regel stellen sich im Backraum während des Backvorgangs jedoch Taupunkttemperaturen zwischen 40 und 95°C ein, bedingt durch Luft, die in den Backraum ungewollt eindringt oder die zur Erzielung technologischer Effekte gezielt in den Backraum eingebracht wird und auf diese Weise die Wasserdampfkonzentration vermindert.

Die verschiedenen Gebäcksorten benötigen zur Ausprägung ihrer jeweiligen Qualitätsmerkmale unterschiedliche Verläufe der Taupunkttemperatur während des Backvorgangs.

Bei vielen Brot- und Kleingebäcksorten wird während der ersten ein bis zwei Minuten des Backvorgangs eine möglichst große Taupunkttemperatur benötigt. Im unmittelbaren weiteren Verlauf des Backvorgangs sind teilweise Taupunkttemperaturen von unter 70 °C erforderlich, beispielsweise um Rissbildung in der Gebäckkruste zu vermeiden. In der Mitte des Backvorgangs ist der Einfluss der Taupunkttemperatur auf die Gebäckqualität weniger relevant. Hier ist es wünschenswert, die Taupunkttemperatur produktspezifisch zu maximieren, um bei möglichst großen Taupunkttemperaturen die größtmögliche Energieeffizienz beim Backen zu erzielen. Gegen Ende des Backvorgangs wird die Taupunkttemperatur üblicherweise auf Werte zwischen 60 und 80 °C gesenkt, um bestimmte Krusteneigenschaften wie Knusprigkeit und Rösche zu erzielen.

Das Verfahren ist mit steigenden Taupunkttemperaturen umso effizienter, weil diese mit der maximal erzielbaren Temperatur des gewonnenen Warmwassers im Verfahren korrespondiert. Bevorzugt wird das Verfahren bei Taupunkttemperaturen oberhalb 50 °C durchgeführt.

Das Wasserdampf/Luft-Gemisch, das sich um das Backgut herum bildet, wird als Schwaden üblicherweise an verschiedenen Stellen bzw. zu verschiedenen Zeitpunkten des Backvorgangs aus dem Backraum entnommen, gesammelt, dabei üblicherweise gemischt und mit freier oder erzwungener Konvektion ins Freie verbracht. Durch Klimaregelung des Backraums ist es möglich, den Wasserdampf im Backraum und dadurch in den Schwaden anzureichern, wodurch die Taupunkttemperatur gesteigert wird und dadurch die Effizienz des zu vorliegenden Verfahrens maximiert wird.

Die Konzentration an organischen, häufig geruchsaktiven Bestandteilen nimmt während des Backvorgangs zu und erreicht im letzten Drittel des Backvorgangs einen maximalen Wert.

Das Verfahren wird bevorzugt analog zum atmosphärischen Druck der korrespondierenden Backräume nur bei atmosphärischem Druck durchgeführt.

Die Schwaden werden bevorzugt unter Herbeiführung der Wasserdampfsättigung auf eine Temperatur unterhalb von 30°C in dem mindestens einen Kondensationsraum abgekühlt. Die Abkühlung von feuchter Luft mit einer Taupunkttemperatur von z.B. 50 °C auf eine Temperatur unter 30 °C verläuft ab Unterschreitung der Lufttemperatur von 50°C gemäß dem Mollier-Diagramm auf der Taupunktlinie. Mit anderen Worten, ab 50 °C kondensiert überschüssiges Wasser und die Taupunkttemperatur der verbleibenden Luft stimmt mit der Lufttemperatur überein. Somit weist die Restluft, d.h. die den Kondensationsraum verlassene Luft eine Temperatur unterhalb von 30°C auf.

Das erfindungsgemäße Verfahren unterscheidet sich von den bisher bekannten Verfahren insbesondere darin, dass die Kühlung der Schwaden separat von einer Kühlung von Rauchgasen erfolgt. Es ist aber auch denkbar, dass die Kühlung der Schwaden gemeinsam mit der Kühlung der Rauchgase erfolgt.

In dem vorliegenden Verfahren wird die Kühlung der Schwaden durch einen direkten Kontakt der Schwaden mit mindestens einem Kühlmedium, insbesondere Wasser oder Schwadenkondensat, in dem mindestens einen Kondensationsraum verwirklicht, wobei der unmittelbare Kontakt der Schwaden und des Kühlmediums im Gegenstrom erfolgt. Die Kühlung der Schwaden im Gegenstrom erlaubt ein permanentes Reinigen der Schwaden von organischen Stoffen und deren Umwandlungsprodukten. Das Kühlmedium ersetzt die bisher üblichen indirekten Wärmeaustauscher. Dadurch entfällt die regelmäßig erforderliche Reinigung und Wartung der Wärmeaustauschoberflächen, so dass die Intervalle zwischen den einzelnen Wartungen der gesamten Anlage erhöht werden können und somit längere Produktionsintervalle möglich sind, was erheblich zu einer Kostenreduzierung des gesamten Produktionsvorganges beiträgt.

In einer bevorzugten Ausführungsform des vorliegenden Verfahrens wird das mindestens eine Kühlmedium mit einer Fließgeschwindigkeit zwischen 1,0 m/min und 5,0 m/min, insbesondere bevorzugt zwischen 1,0 m/min und 2,5 m/min durch den mindestens einen Kondensationsraum geführt. Das Kühlmedium läuft demnach in den Kondensationsraum in Form eines Flüssigkeitsstromes, insbesondere eines kontinuierlichen Flüssigkeitsstromes ein. Es erfolgt keine Sprühkondensation und somit auch keine Tröpfchenbildung des in den Kondensationsraum einlaufenden Kühlmediums. Eine Sprühkondensation wäre im vorliegenden Verfahren auch gar nicht ausführbar, da die Schwaden in den Kondensationsraum mit hoher Strömungsgeschwindigkeit eintreten und damit die Sprühtropfen statt auf einen Füllkörper zu gelangen, vom Luftstrom mitgerissen werden, so dass eine verminderte Reinigungswirkung und eine verschlechterte energetische Auslastung bzw. schlechtere Wärmerückgewinngung eintritt.

Das Kühlmedium wie Wasser oder Schwadenkondensat kann ebenfalls mit einem geeigneten Additiv zur Reduzierung der Oberflächenspannung versetzt werden. Hierfür geeignete Additive sind z.B. Tenside oder Emulgatoren, die eine bessere Benetzung der Keramikoberfläche bewirken.

Weitere Additive z.B. in Form von geeigneten Säuren können zur Einstellung des pH-Wertes des Kühlmediums verwendet werden. Dabei ist ein saurer pH-Wert des Kühlmediums bevorzugt, um das Wachstum von Mikroorganismen wie Bakterien oder auch Pilze zu verhindern bzw. einzuschränken.

Wie oben erwähnt erfolgen die Kondensation der in den Schwaden organischen Bestandteile und deren Umwandlungsprodukte an mindestens einer Oberfläche eines in dem Kondensationsraum angeordneten Kondensationsmittels. Das mindestens eine Kondensationsmittel ist dabei in dem Kondensationsraum derart angeordnet, dass es zumindest zeitweise von dem Kühlmittel kontaktiert bzw. befeuchtet wird. Aufgrund dieser zumindest zeitweise stattfindenden Benetzung der Oberfläche des Kondensationsmittels mit dem Kühlmittel entfällt auch die Notwendigkeit des Waschens derselben, da die auskondensierten bzw. abgeschiedenen organischen Stoffe unmittelbar im Schwadenkondensat gelöst sind. Ein wesentlicher Aspekt ist dabei, dass die Oberfläche der Kondensationsmittel nicht antrocknet, da es sonst zu schwer zu entfernenden Verkrustungen auf der Oberfläche des Kondensationsmittels kommt.

Die mindestens eine Oberfläche des in dem Kondensationsraum angeordneten Kondensationsmittels weist eine Hohlraumstruktur iin Form eines offenporiges Zellsystem auf. Eine strukturierte Packung und/oder eine unstrukturierte Packung sind jedoch auch denkbar, jedoch nicht Bestandteil der Erfindung. Es ist ebenfalls möglich, die Kondensationsmittel mit metallorganischen oder biokatalytischen Oberflächen zu versehen bzw. zu beschichten,
In einer bevorzugten Ausführungsform liegt das als Kondensationsmittel verwendete offenporige Zellsystem in Form eines keramischen Porensystems mit einer Porung von 20 ppi, bevorzugt 15 ppi, insbesondere bevorzugt von 10 ppi vor. So ist z.B. die Verwendung von Keramikschaum mit einer entsprechenden Porengröße denkbar, wobei dieser ca. 20% des freien Querschnitts des Kondensationsraumes, der z.B. in Form einer Säule oder eines Rohres ausgebildet ist, beansprucht.

In einer Ausführungsform wird das nach Kondensation der Schwaden erhaltene Schwadenkondensat unmittelbar, gegebenenfalls nach vorheriger Reinigung oder Filterung, als Warmwasser z.B. für Gebäudeheizungsanlagen verwendet.

Es ist ebenfalls möglich, das nach Kondensation der Schwaden erhaltene Schwadenkondensat in einen Wärmeaustauscher zur Wärmegewinnung zu überführen.

Die den mindestens einen Kondensationsraum nach Auskondensation des Wassers aus den Schwaden verlassene Luft kann eine Strömungsgeschwindigkeit zwischen 0,5 m/s und 2,0 m/s, bevorzugt zwischen 0,5 und 1,5 m/s, insbesondere bevorzugt zwischen 0,7 m/s und 1,1 m/s aufweisen. Die Strömungsgeschwindigkeit der den Kondensationsraum verlassenen Luft bzw. Abluft, d.h. im auskondensierten Zustand am Ende des Kondensationsraumes, kann aus dem gemessenen Wert der Luftgeschwindigkeit z.B. an einem am Ende des Kondensationsraumes vorgesehenen Abluftstutzen berechnet werden. Die angegebenen Werte der Strömungsgeschwindigkeit werden durch die Druckdifferenz im Kondensationsraum beeinflusst. So kann z.B. bei einer Strömungsgeschwindigkeit der Abluft von 0,7 m/s eine Druckdifferenz von 100 Pa im Kondensationsraum vorliegen, während bei einer Strömungsgeschwindigkeit der Abluft von 1,1 m/s die Druckdifferenz im Kondensationsraum 300 Pa betragen kann.

Die Strömung der Schwaden durch den Kondensationsraum, insbesondere durch den mit einer keramischen Packung bzw. mit einem Keramikschaum als Kondensationsmittel versehenen Kondensationsraum ist bevorzugt laminar. Die Art der Strömung ist durch die Packungsdichte der keramischen Packung abhängig. Die Packungsdichte muss dabei optimal sein, um z.B. eine Flutung der keramischen Packung bei zu hoher Packungsdichte zu verhindern.

In einer Ausführungsform wird der nach der Reinigung durch Kondensation verbleibende Luftanteil des Schwadens unmittelbar in die die Schwaden freisetzende Anlage, wie z.B. in den Backofen rückgeführt, wodurch ein pneumatisch geschlossener Backvorgang entsteht.

Das erfindungsgemäße Verfahren kann unter Verwendung einer Vorrichtung mit den Merkmalen des Anspruchs 9 verwirklicht werden. Die vorliegende Vorrichtung wird zur Behandlung von Schwaden, insbesondere zur Entfernung von in den Schwaden enthaltenen organischen Bestandteilen und deren Umwandlungsprodukten und zur Wärmerückgewinnung aus Schwaden, insbesondere Backschwaden, verwendet.

Demnach weist die Vorrichtung zur Behandlung von Schwaden, insbesondere zur Entfernung von in Backschwaden enthaltenen organischen Inhaltsstoffen und deren Umwandlungsprodukten und Wärmerückgewinnung aus Schwaden, insbesondere Backschwaden, zur Verwendung in Anlagen, die Schwaden und darin enthaltene organische Bestandteile und deren Umwandlungsprodukte freisetzen, insbesondere Backöfen, mindestens einen horizontal und/oder vertikal angeordneten Behälter mit mindestens einem Eingang für den Eintritt der Schwaden und mindestens einem Ausgang für den Austritt der behandelten, d.h. der gereinigten Schwaden, sowie mindestens einen Eingang für mindestens ein Kühlmedium in Form eines kontinuierlichen Flüssigkeitsstromes mit einer Fließgeschwindigkeit zwischen 0,5 m/min und 10,0 m/min ohne Bildung von Tröpfchen und mindestens einen Ausgang für das mindestens eine Kühlmedium auf. Die entsprechenden Eingänge und Ausgänge sind dabei derart am Kondensationsraum zueinander angeordnet, dass die Schwaden und das Kühlmedium im Gegenstrom den Kondensationsraum durchströmen. Darüber hinaus umfasst der mindestens eine Kondensationsraum mindestens ein Kondensationsmittel zur Kondensation der Schwaden und weist keinen Wärmeaustauscher auf, d.h. ist wärmetauscherfrei. Das im Kondensationsraum angeordnete Kondensationsmittel weist mindestens eine Hohlraumstruktur in Form eines offenporigen Zellsystems auf, wobei das mindestens eine Kondensationsmittel aus einem metallischen und/oder keramischen Material besteht. Der mindestens eine Kondensationsraum ist bevorzugt ein zylindrischer Behälter wie eine Säule oder ein Rohr oder ein anderweitiges, zur Durchführung des Verfahrens geeignetes Behältnis. Ebenfalls ist es generell möglich, dass der mindestens eine Kondensationsraum parallel mit weiteren Kondensationsräumen vorliegt.

Liegt der Kondensationsraum z.B. in Form einer Säule vor, so können mehrere parallel zueinander angeordnete Säulen als Säulenbündel verwendet werden. Die Höhe einer Säule und somit auch eines Säulenbündels beträgt 100 bis 1500 mm, bevorzugt 500 bis 1000 mm, insbesondere bevorzugt 600 bis 800 mm. Ein Säulenbündel weist z.B. 2 bis 8 Säulen auf, bevorzugt 2 bis 5 Säulen, insbesondere bevorzugt aus 3 Säulen. Der Durchmesser eines Säulenbündels kann zwischen 50 und 500 mm, bevorzugt 100 und 300 mm, insbesondere bevorzugt 200 mm betragen.

Bevorzugt ist das mindestens eine Kondensationsmittel in dem Kondensationsraum so angeordnet, dass es von dem Kühlmedium zumindest zeitweise, insbesondere in definierten zeitlichen Abständen kontaktiert wird.

Wie ausgeführt besteht das mindestens eine Kondensationsmittel aus einem Material in Form eines offenporigen Zellsystems (OZS), kann aber nicht erfindungsgemäß auch aus einer strukturierten und/oder unstrukturierten Packung bestehen

Bei Verwendung eines offenporigen Zellsystems weisen die Poren dieses Materiales einen mittleren Porendurchmesser zwischen 1 und 20 mm, bevorzugt zwischen 5 und 15 mm, insbesondere bevorzugt zwischen 8 und 10 mm auf. Das verwendete Material kann auch als schwammartiges Material mit entsprechend großen Poren vorliegen. Das für das Kondensationsmittel verwendete Material besteht bevorzugt aus einem metallischen und/oder keramischen Stoff. Die Verwendung von metallischem Material dient darüber hinaus der zusätzlichen Wärmeleitung. Das keramische Material liegt bevorzugt als Sintermaterial oder als Keramikschaum vor.

Es ist aber auch möglich, dass das mindestens eine Kondensationsmittel in dem Kondensationsraum lose oder befestigt in mindestens einem geeigneten Behälter vorliegt. So ist es denkbar, dass das Kondensationsmittel z.B. in eine Trommel eingetragen wird, die sich in dem Kondensationsraum, insbesondere einer horizontal angeordneten Trommel rotierend bewegt. Für den Fall, dass das Kondensationsmittel lose in dem Behälter vorliegt, ist der Behälter bevorzugt vollständig mit dem Kondensationsmittel gefüllt, so dass das Kondensationsmittel nur geringfügig oder gar nicht in dem Behälter bewegbar ist. Durch die Rotation wird zum einem die Bildung von Flüssigkeits- und Luftkanälen verhindert. Zum anderen taucht das Kondensationsmaterial während der Rotation in kontinuierlichen zeitlichen Abständen in einem an der Unterseite des horizontal gelagerten Kondensationsraumes gebildeten Sumpf bestehend aus dem Kühlmittel, wie Wasser oder Schwadenkondensat ein. Dies garantiert die erforderliche kontinuierliche Benetzung des Porenmateriales mit dem Kühlmittel.

In einem vertikal angeordneten Kondensationsraum ist das Kondensationsmittel lose oder befestigt in mindestens einem geeigneten Behälter angeordnet. Das Kondensationsmittel kann auch in Form von einzelnen, übereinander angeordneten horizontalen Scheiben im Behälter angeordnet sein, wobei die Scheiben rotiert werden können. Durch geeignete Strömungsführung von Wasser/Schwadenkondensat und Luft, welche die Ausbildung von Kanälen verhindert, kann jedoch der Wärme- und Stoffübergang so gefördert werden, dass auf die Rotation des Kondensationsmittels verzichtet werden kann.

Die vorliegende Vorrichtung umfasst mindestens eine mit dem mindestens einen Kondensationsraum in Verbindung stehende Wärmeaustauschanlage, durch welche das in dem Kondensationsraum gebildete Schwadenkondensat geführt wird. Die Wärme aus den in dem Kondensationsraum kondensierten Schwaden, d.h. das Schwadenkondensat, das üblicherweise Temperaturen nahe oder oberhalb der Taupunkttemperatur der Schwaden aufweist, wird in einer nachgeschalteten Wärmeaustauschanlage gewonnen und z.B. zur Erwärmung von Wasser verwendet.

Der Kondensationsraum der erfindungsgemäßen Vorrichtung kann je nach Erfordernis und Platzbedarf unterschiedlich positioniert sein. So ist der mindestens eine Kondensationsraum in einer Ausführungsform unmittelbar in der Abgasführung der Schwaden nach außen angeordnet. Das heißt, dass ein als Kondensationsraum verwendeter Behälter vertikal in der Abgasführung bzw. im Schwadenkamin angeordnet ist und somit kein weiterer Platzbedarf besteht. Dies erleichtert den Einbau der Behälter in eine Vielzahl von großtechnischen Anlagen.

Es ist aber auch möglich, den mindestens einen Kondensationsraum separat zur Abgasführung, insbesondere horizontal zur Abgasführung, anzuordnen. Hierbei ist der als Kondensationsraum verwendete Behälter bevorzugt an dem Ende der Abgasführung angeordnet, welches in unmittelbarer Nähe zum Backofen oder einer sonstigen Schwadenerzeugenden beheizbaren Vorrichtung liegt. Der Kondensationsraum ist somit horizontal am unteren Ende der Abgasführung der Schwaden angeordnet, so dass die Schwaden aus dem Ofen unmittelbar in den Kondensationsraum eingeführt werden.

Die Erfindung wird nachfolgend unter Bezugnahme auf die Figuren an Ausführungsbeispielen erläutert. Es zeigen:
- Figur 1A: eine schematische Ansicht eines Kondensationsraumes in Form eines Behälters verwendbar in einer erfindungsgemäßen Vorrichtung gemäß einer ersten Ausführungsform;
- Figur 1B: eine schematische Ansicht eines Kondensationsraumes in Form eines Behälters verwendbar in einer erfindungsgemäßen Vorrichtung gemäß einer zweiten Ausführungsform;
- Figur 2: eine schematische Ansicht einer erfindungsgemäßen Vorrichtung mit einem Kondensationsraum gemäß Figur 1A; und
- Figur 3: eine schematische Ansicht einer erfindungsgemäßen Vorrichtung mit einem Kondensationsraum gemäß Figur 1B.

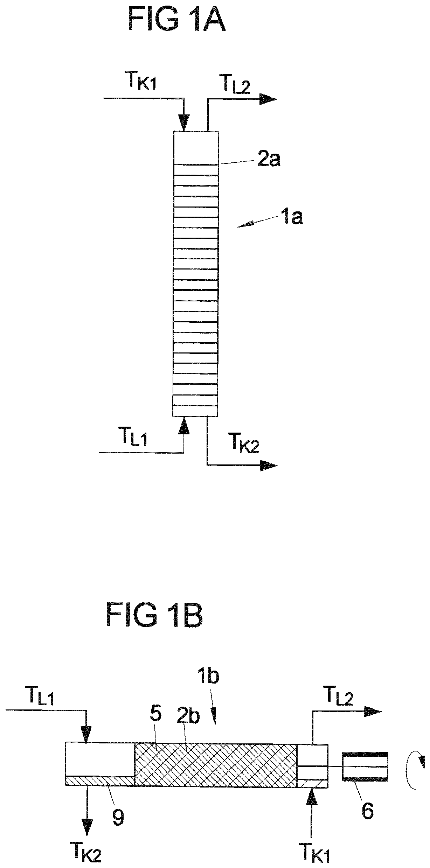

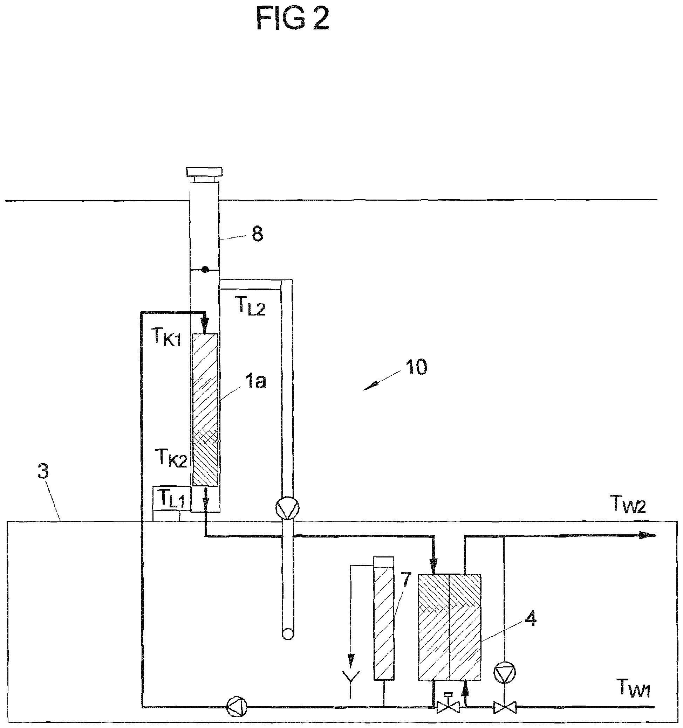

Figur 1A zeigt einen Behälter 1a als Kondensationsraum, der vertikal in einer ersten Ausführungsform der erfindungsgemäßen Vorrichtung 10 angeordnet ist (siehe Figur 2), wobei der Behälter 1a unmittelbar im Schwadenkamin 8 angeordnet ist und somit Teil des Schwadenkamins 8 ist, was zu einer Platzersparnis führt. Der Behälter 1a umfasst ein Kondensationsmittel 2, welches aus offenporigem Material, hier insbesondere ein keramisches Sintermaterial bzw. Keramikschaum mit einer Porung von 10 ppi, hergestellt ist. Das Kondensationsmittel 2 liegt im vertikalen Behälter 1a in Form von OZS-Strukturen vor, die übereinander angeordnet sind.

Die den Backofen verlassenen Backschwaden L treten am unteren Ende des vertikalen Behälters 1a in denselben mit einer Temperatur T_{L1} ein. Während des Durchströmens des vertikalen Behälters 1a werden die Backschwaden L im Gegenstrom durch ein geeignetes Kühlmittel K in Form von Kondensat oder Wasser abgekühlt, welches am oberen Ende des vertikalen Behälters 1a in denselben mit der Temperatur T_{K1} eintritt.

Während des Durchströmens des vertikalen Behälters 1a erfolgt neben der Abkühlung der Backschwaden L auch deren Kondensation, wobei es zu einer gleichzeitigen Kondensation von in den Schwaden enthaltendem Wasserdampf als auch einer Abscheidung der in den Schwaden enthaltenden organischen Bestandteile kommt. Hierbei erfolgt bevorzugt eine vollständige bzw. fast vollständige Kondensation der Backschwaden, so dass auf die Verwendung von weiteren Kondensationsmitteln wie z.B. Wärmeaustauschern im Kondensationsraum oder außerhalb des Kondensationsraumes verzichtet werden kann.

Durch die Anordnung der Oberflächen des Kondensationsmittels 2 und durch das Abfließen des Schwadenkondensats von den Oberflächen des Kondensationsmittels 2 wird die Selbstreinigung derselben herbeigeführt, so dass die in konventionellen Verfahren notwendige Unterbrechung des Backvorgangs zum Zwecke der Reinigung der Wärmeaustauschflächen nicht notwendig ist. Somit ist es nunmehr möglich, die Backanlage mit wesentlich verlängerten Laufzyklen zu betreiben, was zu einer erheblichen Kostenreduzierung beiträgt.

Gemäß Figur 2 ist der vertikale Behälter 1a Teil einer erfindungsgemäßen Vorrichtung 10, wobei der Behälter 1a unmittelbar mit dem Backofen 3 verbunden ist. Die im Backofen 3 entstehenden Backschwaden werden mit den üblicherweise vorhandenen ofeninternen Einrichtungen wie Schwadenschieber und Hauben gesammelt und mit den vorhandenen ofeninternen Rohrleitungen und Kanälen an die Ofenperipherie geführt. Anstatt der bisher üblichen Ausleitung der Backschwaden in die freie Umgebung über sogenannte Schwadenkamine werden die Backschwaden in den vertikalen Behälter 1a geführt.

In den genannten Ausführungsformen ist es möglich, die Konzentration der Backschwaden L mittels bereits vorhandener oder nachzurüstender Backraum-Klimaregelungen in Abhängigkeit von den Backprodukten und deren Backraumbelegung zu maximieren.

Die beim Durchströmen des Behälters 1a abgekühlten Backschwaden L verlassen den Behälter 1a mit einer Temperatur T_{L2}, wobei T_{L2} < T_{L1} ist, und werden zurück in den Backofen 3 geleitet (siehe Figur 2), so dass ein geschlossener Backprozess entsteht und Schwadeninhaltstoffe nicht mehr in die Luft emittiert werden.

Das Schwadenkondensat K wird beim Durchströmen des Behälters 1a aufgewärmt und verlässt den Behälter 1a an dessen unteren Ende mit der Temperatur T_{K2}, wobei T_{K2} > T_{K1} ist.

Gemäß der Ausführungsform der Figur 2 wird das Schwadenkondensat K in eine Wärmeaustauschanlage 4 eingeführt. Die Wärmeaustauschanlage 4 ist konventioneller Art, so dass die konstruktive Gestaltung des Wärmeaustauschers beliebig gewählt werden kann. In der Wärmeaustauschanlage 4 wird das Kondensat K durch Vorbeiführen an einem geeigneten Kühlmittel wie z.B. Wasser abgekühlt. Das Kühlwasser W wird mit einer Temperatur T_{W1} in die Anlage 4 eingespeist, in der Anlage 4 erwärmt und verlässt die Anlage 4 mit der Temperatur T_{W2}, wobei T_{W2} > T_{W1} ist. Das erwärmte Kühlwasser kann als Warmwasser für Gebäudeheizungsanlagen oder zur Vorwärmung von Kesselspeisewasser verwendet werden.

Das aus der Wärmeaustauschanlage 4 austretende abgekühlte Schwadenkondensat K wird unmittelbar zur Abkühlung der Backschwaden wiederverwendet und hierfür mit der Temperatur T_{K1} am oberen Ende des vertikalen Behälters 1a in denselben eingespeist. Das Backschwadenkondensat K zirkuliert also in einem geschlossenen System.

Die Menge des als Kühlmittel verwendeten Schwadenkondensates K ist durch einen Überlaufbehälter 7 regulierbar.

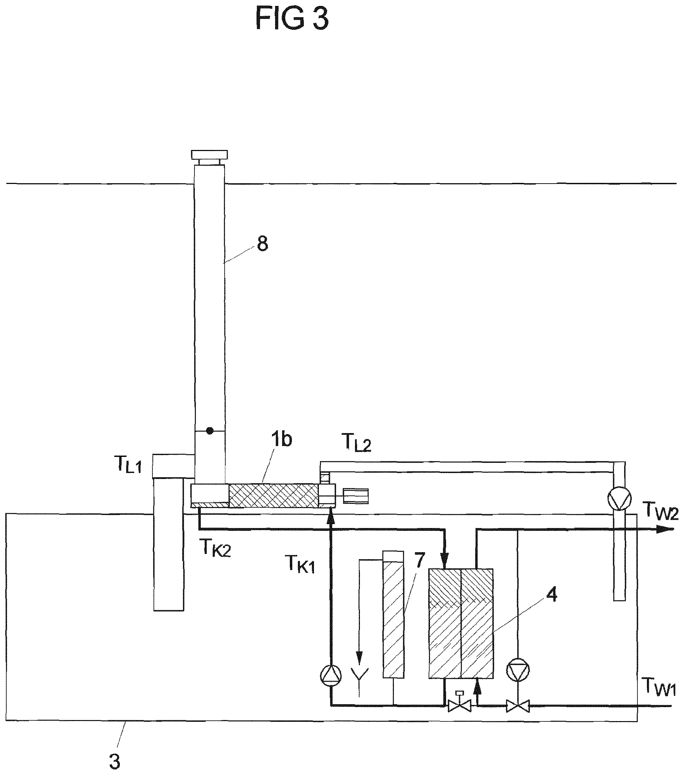

Figur 1B zeigt einen Behälter 1b als Kondensationsraum, der horizontal in einer weiteren Ausführungsform der erfindungsgemäßen Vorrichtung 10 angeordnet ist (siehe Figur 3). Der Behälter 1b ist dabei separat vom Schwadenkamin 8 und horizontal zu diesem angeordnet.

Der horizontale Behälter 1b umfasst eine rotierbare Trommel 5, die mittels eines Motors 6 angetrieben wird. In der Trommel 5 ist das offenporige Kondensationsmittel 2b eingebracht und an der Trommel 5 befestigt. Es ist jedoch auch vorstellbar, dass das gesamte Volumen der Trommel 5 mit dem losen Kondensationsmittel 2b so ausgefüllt ist, dass sich das Kondensationsmittel 2b in der Trommel 5 nicht bewegt.

Die Backschwaden L werden mit der Temperatur T_{L1} unmittelbar vom Backofen in den horizontalen Behälter 1b eingeführt, und zwar an dem Ende des Behälters 1b, der am nächsten zum Backschwadenkamin 8 gelagert ist. Nach Durchströmen des Behälters 1b, wobei es zur Abkühlung und Kondensation der Backschwaden kommt, verlassen die Backschwaden an dem gegenüberliegenden Ende den Behälter 1b mit der Temperatur T_{L2}, wobei T_{L2} < T_{L1} ist. Die abgekühlten Backschwaden L werden zurück in den Backofen geleitet (siehe auch Figur 3).

Der horizontale Behälter 1b weist auf seiner inneren Unterseite einen Sumpf 9 aus als Kühlmittel dienendem Schwadenkondensat K auf. Die Menge des sich im Behälter 1b befindlichen Kühlmittels und damit die Füllhöhe des Sumpfes 9 ist variabel einstellbar. Die Regulierung der Kühlmittelmenge kann z.B. durch den Überlaufbehälter 7 erfolgen.

Durch die Rotation der Trommel 5 wird das sich in der Trommel befindliche Kondensationsmittel 2b ebenfalls bewegt, so dass dasselbe während der Rotation in kontinuierlichen zeitlichen Abständen in den an der Unterseite des horizontal gelagerten Behälters gebildeten Sumpf 9 eintaucht. Hierdurch wird die erforderliche kontinuierliche Benetzung des Porenmateriales mit dem Kühlmittel garantiert und gleichzeitig wird das Kondensationsmittel 2b regelmäßig gewaschen, wodurch die Erfordernisse an eine zusätzliche externe Reinigung des Kondensationsmittels 2b reduziert werden.

Das als Kühlmittel fungierende Backschwadenkondensat K wird mit der Temperatur T_{K1} in den Behälter 1b eingeführt, durch diesen z.B. mittels Pumpen, durchgeführt, wobei das Kühlmittel K im Gegenstrom durch die Backschwaden L erwärmt wird, und verlässt den Behälter 1b mit der Temperatur T_{K2}, wobei T_{K2} > T_{K1} ist.

Das erwärmte Schwadenkondensat K wird anschließend in eine Wärmeaustauschanlage 4 eingeführt und dort wie für das erste Ausführungsbeispiel bereits oben beschrieben abgekühlt und in den Behälter 1b recycelt.

### Bezugszeichenliste

- 1a: vertikaler Behälter
- 1b: horizontaler Behälter
- 2a: Kondensationsmittel in Form von Packungen für vertikale Durchströmung
- 2b: Kondensationsmittel in Form von Packungen für horizontale Durchströmung
- 3: Backofen
- 4: Wärmeaustauschanlage
- 5: Trommel
- 6: Motor zum Rotieren der Trommel 5
- 7: Überlaufbehälter
- 8: Schwadenkamin
- 9: Sumpf
- 10: Vorrichtung zur Entfernung der organischen Bestandteile und zur Wärmerückgewinnung aus Backschwaden

## Patentansprüche

1. Verfahren zur Behandlung von Schwaden, insbesondere Backschwaden, zur Anwendung in Anlagen, die Wasserdampf und organische Bestandteile und deren Umwandlungsprodukte enthaltene Schwaden freisetzen, insbesondere in Backöfen,
**dadurch gekennzeichnet, dass**
der in den Schwaden enthaltene Wasserdampf einstufig durch direkte Kühlung der Schwaden durch Kontaktierung der Schwaden mit mindestens einem Kühlmedium im Gegenstrom in mindestens einem Kondensationsraum (1a, 1b) auskondensiert wird und dabei auch die in den Schwaden enthaltenen organischen Bestandteile und deren Umwandlungsprodukte größtenteils abgeschieden werden, wobei das mindestens eine Kühlmedium in den mindestens einen Kondensationsraum (1a, 1b) in Form eines kontinuierlichen Flüssigkeitsstromes mit einer Fließgeschwindigkeit zwischen 0,5 m/min und 10,0 m/min ohne Bildung von Tröpfchen fließt,
wobei die Kondensation des in den Schwaden enthaltenen Wasserdampfes und die Abscheidung der organischen Bestandteile und deren Umwandlungsprodukte an mindestens einer Oberfläche eines im Kondensationsraum (1a, 1b) angeordneten Kondensationsmittels (2a, 2b) erfolgen, und wobei das im Kondensationsraum (1a, 1b) angeordnete Kondensationsmittel (2a, 2b) mindestens eine Hohlraumstruktur in Form eines offenporigen Zellsystems aufweist,
und wobei das für das Kondensationsmittel verwendete Material aus einem metallischen und/oder keramischen Stoff besteht.

2. Verfahren nach Anspruch 1, **dadurch gekennzeichnet, dass** die Kondensation des in den Schwaden enthaltenen Wasserdampfes in dem mindestens einen Kondensationsraum (1a, 1b) ohne Verwendung von Wärmeaustauschern bewirkt wird.

3. Verfahren nach Anspruch 1 oder 2, **dadurch gekennzeichnet, dass** das mindestens eine Kühlmedium Wasser oder Schwadenkondensat ist.

4. Verfahren nach einem der vorhergehenden Ansprüche, **dadurch gekennzeichnet, dass** die Schwaden unter Herbeiführung der Wasserdampfsättigung auf eine Temperatur unterhalb von 30°C in dem mindestens einen Kondensationsraum abgekühlt werden.

5. Verfahren nach einem der vorhergehenden Ansprüche, **dadurch gekennzeichnet, dass** das mindestens eine Kühlmedium mit einer Fließgeschwindigkeit zwischen 1,0 m/min und 5,0 m/min, insbesondere bevorzugt zwischen 1,0 m/min und 2,5 m/min durch den mindestens einen Kondensationsraum fließt.

6. Verfahren nach einem der vorhergehenden Ansprüche, **dadurch gekennzeichnet, dass** das Kondensationsmittel (2a, 2b) ein offenporiges Zellsystem in Form eines keramischen Schwamms mit einer Porung von 20 ppi, bevorzugt 15 ppi, insbesondere bevorzugt von 10 ppi ist.

7. Verfahren nach einem der vorhergehenden Ansprüche, **dadurch gekennzeichnet, dass** die Kühlung der Schwaden separat oder zusammen mit einer Kühlung von Rauchgasen erfolgt.

8. Verfahren nach einem der vorhergehenden Ansprüche, **dadurch gekennzeichnet, dass** die Schwaden bei Eintritt in den Kondensationsraum (1a, 1b) eine Taupunkttemperatur θd von mindestens 50°C, bevorzugt zwischen 50°C und 95°C, aufweist.

9. Vorrichtung zur Behandlung von Backschwaden zur Verwendung in einem Verfahren nach einem der vorhergehenden Ansprüche in Anlagen, die Wasserdampf und organische Bestandteile und deren Umwandlungsprodukte enthaltene Schwaden freisetzen, insbesondere Backöfen,
**gekennzeichnet durch**
mindestens einen horizontal und/oder vertikal angeordneten Kondensationsraum (1a, 1b) mit mindestens einem Eingang für den Eintritt der Schwaden und mindestens einem Ausgang für den Austritt der behandelten Schwaden sowie mit mindestens einem Eingang für mindestens ein Kühlmedium in Form eines kontinuierlichen Flüssigkeitsstromes mit einer Fließgeschwindigkeit zwischen 0,5 m/min und 10,0 m/min ohne Bildung von Tröpfchen und mindestens einem Ausgang für das mindestens eine Kühlmedium, wobei die jeweiligen Eingänge und Ausgänge derart zueinander angeordnet sind, dass Schwaden und Kühlmedium im Gegenstrom den Kondensationsraum durchströmen, und wobei der mindestens eine Kondensationsraum (1a, 1b) mindestens ein Kondensationsmittel (2a, 2b) zur Kondensation der Schwaden und zur Abscheidung der in den Schwaden enthaltenen organischen Bestandteile und deren Umwandlungsprodukte umfasst, wobei das im Kondensationsraum (1a, 1b) angeordnete Kondensationsmittel (2a, 2b) mindestens eine Hohlraumstruktur in Form eines offenporigen Zellsystems aufweist, wobei das mindestens eine Kondensationsmittel (2a, 2b) aus einem metallischen und/oder keramischen Material besteht, und wobei der mindestens eine Kondensationsraum (1a, 1b) wärmetauscherfrei ist.

10. Vorrichtung nach einem Anspruch 9, **dadurch gekennzeichnet, dass** das mindestens eine Kondensationsmittel (2a, 2b) in dem Kondensationsraum (1a, 1b) so angeordnet ist, dass es von dem Kühlmedium kontaktiert wird.

11. Vorrichtung nach einem der Ansprüche 9 bis 10, **dadurch gekennzeichnet, dass** das mindestens eine Kondensationsmittel (2a, 2b) aus einem Keramikschaum besteht.

12. Verwendung einer Vorrichtung nach mindestens einem der Ansprüche 9 bis 11 zur Behandlung von Schwaden, insbesondere zur Entfernung von in den Schwaden enthaltenen organischen Inhaltsstoffen und deren Umwandlungsprodukte und zur Wärmerückgewinnung aus Schwaden, insbesondere Backschwaden.

## Claims

1. Method for treating fumes, in particular baking fumes, for use in installations which release fumes containing water vapour and organic constituents and the conversion products of the latter, in particular in baking ovens,
**characterized in that**,
the water vapour contained in the fumes is, by way of direct cooling of the fumes as a result of the fumes making contact with at least one cooling medium in a counterflow configuration, condensed out in a single stage in at least one condensation chamber (1a, 1b) and also, at the same time, the organic constituents and the conversion products of the latter contained in the fumes are, for the most part, separated out, wherein the at least one cooling medium flows into the at least one condensation chamber (1a, 1b) in the form of a continuous liquid stream with a flow speed of between 0.5 m/min and 10.0 m/min without droplet formation,
wherein the condensation of the water vapour contained in the fumes and the separation of the organic constituents and the conversion products of the latter take place at at least one surface of a condensation means (2a, 2b) arranged in the condensation chamber (1a, 1b), and wherein the condensation means (2a, 2b) arranged in the condensation chamber (1a, 1b) has at least one cavity structure in the form of an open-pored cell system,
and wherein the material used for the condensation means consists of a metallic and/or ceramic substance.

2. Method according to Claim 1, **characterized in that** the condensation of the water vapour contained in the fumes in the at least one condensation chamber (1a, 1b) is brought about without using heat exchangers.

3. Method according to Claim 1 or 2, **characterized in that** the at least one cooling medium is water or fume condensate.

4. Method according to one of the preceding claims, **characterized in that** the fumes are, in the at least one condensation chamber, cooled to a temperature of below 30°C, while bringing about the saturation of the water vapour.

5. Method according to one of the preceding claims, **characterized in that** the at least one cooling medium flows with a flow speed of between 1.0 m/min and 5.0 m/min, in particular preferably of between 1.0 m/min and 2.5 m/min, through the at least one condensation chamber.

6. Method according to one of the preceding claims, **characterized in that** the condensation means (2a, 2b) is an open-pored cell system in the form of a ceramic sponge, with a pore size of 20 ppi, preferably of 15 ppi, in particular preferably of 10 ppi.

7. Method according to one of the preceding claims, **characterized in that** the cooling of the fumes takes place separately from, or in combination with, cooling of flue gases.

8. Method according to one of the preceding claims, **characterized in that**, upon entering the condensation chamber (1a, 1b), the fumes have a dew-point temperature θd of at least 50°C, preferably of between 50°C and 95°C.

9. Device for treating baking fumes, for use in a method according to one of the preceding claims in installations which release fumes containing water vapour and organic constituents and the conversion products of the latter, in particular baking ovens,
**characterized by**
at least one horizontally and/or vertically arranged condensation chamber (1a, 1b) having at least one inlet for the entry of the fumes and at least one outlet for the exit of the treated fumes, and also having at least one inlet for at least one cooling medium in the form of a continuous liquid stream with a flow speed of between 0.5 m/min and 10.0 m/min without droplet formation and at least one outlet for the at least one cooling medium, wherein the respective inlets and outlets are arranged with respect to one another such that the fumes and the cooling medium flow through the condensation chamber in a counterflow configuration, and wherein the at least one condensation chamber (1a, 1b) comprises at least one condensation means (2a, 2b) for condensing fumes and for separating out the organic constituents and the conversion products of the latter contained in the fumes, wherein the condensation means (2a, 2b) arranged in the condensation chamber (1a, 1b) has at least one cavity structure in the form of an open-pored cell system, wherein the at least one condensation means (2a, 2b) consists of a metallic and/or ceramic material, and wherein the at least one condensation chamber (1a, 1b) is free of heat exchangers.

10. Device according to Claim 9, **characterized in that** the at least one condensation means (2a, 2b) is arranged in the condensation chamber (1a, 1b) such that the cooling medium makes contact with it.

11. Device according to either of Claims 9 and 10, **characterized in that** the at least one condensation means (2a, 2b) consists of a ceramic foam.

12. Use of a device according to at least one of Claims 9 to 11 for treating fumes, in particular for removing organic components and the conversion products of the latter contained in the fumes and for recovering heat from fumes, in particular baking fumes.

## Revendications

1. Procédé de traitement de buées, notamment de buées de cuisson, destiné à être utilisé dans des installations qui libèrent des buées contenant de la vapeur d'eau et des composants organiques et leurs produits de transformation, en particulier dans des fours de cuisson,
**caractérisé en ce que**
la vapeur d'eau contenue dans les buées est condensée en une seule étape par refroidissement direct des buées par contact des buées avec au moins un milieu de refroidissement à contre-courant dans au moins une chambre de condensation (1a, 1b) et ainsi les composants organiques et leur produits de transformation contenus dans les buées sont également en grande partie séparés, l'au moins un milieu de refroidissement s'écoulant dans l'au moins une chambre de condensation (1a, 1b) circule sous la forme d'un flux de liquide continu à une vitesse d'écoulement comprise entre 0,5 m/min et 10,0 m/min sans la formation de gouttelettes,
la condensation de la vapeur d'eau contenue dans les buées et le dépôt des composants organiques et de leurs produits de conversion se faisant sur au moins une surface d'un moyen de condensation (2a, 2b) disposé dans la chambre de condensation (1a, 1b), et le moyen de condensation (2a, 2b) disposé dans la chambre de condensation (1a, 1b) comportant au moins une structure de cavité se présentant sous la forme d'un système alvéolaire à pores ouverts,
et le matériau utilisé pour le moyen de condensation étant constitué d'une matière métallique et/ou céramique.

2. Procédé selon la revendication 1, **caractérisé en ce que** la condensation de la vapeur d'eau contenue dans les buées est effectuée sans l'utilisation d'échangeurs de chaleur dans l'au moins une chambre de condensation (1a, 1b).

3. Procédé selon la revendication 1 ou 2, **caractérisé en ce que** l'au moins un milieu de refroidissement est l'eau ou un condensat de buées.

4. Procédé selon l'une des revendications précédentes, **caractérisé en ce que** les buées sont refroidies à une température inférieure à 30 °C dans l'au moins une chambre de condensation pour saturation de la vapeur d'eau.

5. Procédé selon l'une des revendications précédentes, **caractérisé en ce que** l'au moins un milieu de refroidissement s'écoule à une vitesse d'écoulement comprise entre 1,0 m/min et 5,0 m/min, de manière particulièrement préférée entre 1,0 m/min et 2,5 m/min dans au moins une chambre de condensation.

6. Procédé selon l'une des revendications précédentes, **caractérisé en ce que** le moyen de condensation (2a, 2b) est un système alvéolaire à pores ouverts se présentant sous la forme d'une éponge en céramique présentant une structure poreuse de 20 ppi, de préférence de 15 ppi, de manière particulièrement préférée de 10 ppi.

7. Procédé selon l'une des revendications précédentes, **caracterisé en ce que** le refroidissement des buées est effectué séparément ou conjointement avec un refroidissement des gaz de fumées.

8. Procédé selon l'une des revendications précédentes, **caracterisé en ce que** les buées ont à l'entrée dans la chambre de condensation (1a, 1b), un point de rosée θd d'au moins 50 °C, de préférence, entre 50 °C et 95 °C.

9. Dispositif de traitement de buées de cuisson destiné à être utilisé dans un procédé selon l'une des revendications précédentes dans des installations qui libèrent des buées contenant de la vapeur d'eau et des composants organiques et leurs produits de transformation, en particulier des fours de cuisson, **caractérisé par**
au moins une chambre de condensation (1a, 1b), disposée horizontalement et/ou verticalement, qui comporte au moins une entrée destinée à l'entrée de buées et au moins une sortie destinée à la sortie des buées traitées, ainsi qu'au moins une entrée destinée à au moins un milieu de refroidissement se présentant sous la forme d'un flux de liquide continu à une vitesse d'écoulement comprise entre 0,5 m/min et 10,0 m/min sans formation de gouttelettes, et au moins une sortie destinée à l'au moins un milieu de refroidissement, les entrées et sorties respectives étant disposées les unes par rapport aux autres de telle sorte que les buées et le milieu de refroidissement s'écoulent à contre-courant à travers la chambre de condensation, et l'au moins une chambre de condensation (1a, 1b) comportant au moins un moyen de condensation (2a, 2b) destiné à la condensation des buées et au dépôt des composants organiques et de leurs produits de transformation contenus dans les buées, le moyen de condensation (2a , 2b) disposé dans la chambre de condensation (1a, 1b) comportant au moins une structure creuse se présentant sous la forme d'un système alvéolaire à pores ouverts, l'au moins un moyen de condensation (2a, 2b) étant constitué d'une matière métallique et/ou céramique, et l'au moins une chambre de condensation (1a, 1b) étant dépourvue d'échangeur de chaleur.

10. Dispositif selon la revendication 9, **caracterisé en ce que** l'au moins un moyen de condensation (2a, 2b) est disposé dans la chambre de condensation (1a, 1b) de manière à être amené en contact avec le milieu de refroidissement.

11. Dispositif selon l'une des revendications 9 et 10, **caracterisé en ce que** l'au moins un moyen de condensation (2a, 2b) est constitué d'une mousse céramique.

12. Utilisation d'un dispositif selon l'une des revendications 9 à 11 pour le traitement de buées, en particulier pour l'élimination de composants organiques et de leurs produits de transformation contenus dans les buées et la récupération de la chaleur des buées, en particulier des buées de cuisson.
